(19) Europäisches Patentamt
European Patent Office
Office européen des brevets

(11) **EP 3 305 845 B1**

(12) **EUROPEAN PATENT SPECIFICATION**

(45) Date of publication and mention
of the grant of the patent:
**04.08.2021 Bulletin 2021/31**

(21) Application number: **16799758.4**

(22) Date of filing: **28.04.2016**

(51) Int Cl.:
*C08L 27/16* (2006.01)    *C08J 3/24* (2006.01)
*C08L 53/00* (2006.01)    *C08K 5/053* (2006.01)
*C08K 5/13* (2006.01)    *C08K 5/17* (2006.01)
*C08K 5/3492* (2006.01)

(86) International application number:
**PCT/JP2016/063380**

(87) International publication number:
**WO 2016/190050 (01.12.2016 Gazette 2016/48)**

(54) **THERMOPLASTIC FLUORINE RESIN COMPOSITION AND METHOD FOR PRODUCING CROSS-LINKED BODY**

THERMOPLASTISCHE FLUORHALTIGE HARZZUSAMMENSETZUNG UND VERFAHREN ZUR HERSTELLUNG EINES VERNETZTEN KÖRPERS

COMPOSITION DE RÉSINE FLUORÉE THERMOPLASTIQUE, ET PROCÉDÉ DE FABRICATION DE CORPS RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2015 JP 2015107292**

(43) Date of publication of application:
**11.04.2018 Bulletin 2018/15**

(73) Proprietor: **Valqua, Ltd.**
**Tokyo 141-6024 (JP)**

(72) Inventor: **OSUMI, Naoki**
**Gojo-shi**
**Nara 637-0014 (JP)**

(74) Representative: **Vossius & Partner**
**Patentanwälte Rechtsanwälte mbB**
**Siebertstrasse 3**
**81675 München (DE)**

(56) References cited:
**EP-A1- 1 231 239      EP-A1- 1 452 561**
**WO-A1-2015/028765    WO-A1-2015/098338**
**JP-A- H0 912 818      JP-A- H07 205 285**
**JP-A- 2004 263 038    JP-A- 2006 342 241**
**JP-A- 2008 231 330    JP-A- 2008 505 205**
**JP-A- 2013 056 979    US-A- 5 275 887**
**US-A- 5 858 540**

**Description**

TECHNICAL FIELD

The present invention relates to a thermoplastic fluororesin composition. The present invention also relates to a method for producing a cross-linked body with use of the thermoplastic fluororesin composition.

BACKGROUND ART

Cross-linked rubbers are elastomers that are made to have a cross-linked structure by causing a cross-linking reaction between molecular chains of a cross-linkable rubber component (elastomer forming component) with use of a reagent referred to as a cross-linking agent. The cross-linked rubbers are often used for, for example, sealing members such as a gasket and packing, a hose, and a tube, making use of characteristics that the cross-linked rubbers are excellent in heat resistance and chemical resistance. Among the cross-linked rubbers, a fluorine-based cross-linked rubber (hereinafter, referred to as a fluorine rubber) is excellent in compression set characteristics that indicates distortion caused by heat deterioration and is suitable for use in a high temperature environment (e.g., Japanese Patent Laying-Open No. 2005-113035 (PTD 1)).

CITATION LIST

PATENT DOCUMENT

PTD 1: Japanese Patent Laying-Open No. 2005-113035
PTD 2: WO 2006/057331 A
PTD 3: Japanese Patent Laying-Open No. 2009-138158
PTD 4: Japanese Patent Laying-Open No. 2002-167454
PTD 5: Japanese Patent Laying-Open No. 2002-173543
PTD 6: EP 1231239 A1
PTD 7: US 5275887 A

SUMMARY OF INVENTION

TECHNICAL PROBLEMS

Production of a molded body made from a cross-linked rubber has the following problems, and it has been considered that an improvement in production efficiency of the molded body is difficult:

a) a cross-linking reaction is essential for molding into a predetermined shape and thus extrusion molding and injection molding are unsuitable for the production of the molded body, which makes difficult continuous production of the molded body by continuously performing molding;
b) once a cross-linked structure is formed and the shape of the molded body is fixed, it is impossible to reuse the molded material and perform the molding step again even when there is something wrong with the molded shape, because the cross-linking reaction is irreversible, the molded body does not melt even when heated, and the shape is also irreversible.

In the meantime, as the elastomer, there is one referred to as a "thermoplastic elastomer" as well as the cross-linked rubber. Generally, as the thermoplastic elastomer, there can be exemplified 1) a composition obtained by blending a thermoplastic resin component with a rubber component, 2) a composition formed by dynamically cross-linking a composition containing a thermoplastic resin component and a rubber component, and 3) a block copolymer of a thermoplastic resin component and a rubber component. In the thermoplastic elastomer, the thermoplastic resin component serves as a pseudo-cross-linking site at a temperature less than a melting point of the thermoplastic resin component to fix the shape of the thermoplastic elastomer and allows the thermoplastic elastomer to exhibit rubber elasticity, whereas the thermoplastic resin component melts at a temperature greater than or equal to the melting point, allowing a change in shape of the thermoplastic elastomer. The dynamic cross-linking refers to a method of cross-linking a cross-linkable rubber component while melt-kneading a thermoplastic resin component and an uncross-linked cross-linkable rubber component together with a cross-linking agent.

For example, WO 2006/057331 A (PTD 2) describes a thermoplastic elastomer composition formed by dynamically cross-linking a composition containing a fluororesin, a cross-linkable fluorine rubber component, and a cross-linking agent. Japanese Patent Laying-Open No. 2009-138158 (PTD 3) describes that a thermoplastic elastomer composition is prepared that is formed by dynamically cross-linking a composition containing a fluororesin, uncross-linked fluorine rubber particles, and a cross-linking agent, and the thermoplastic elastomer composition is molded and then irradiated with a gamma-ray to give a molded article.

In addition, Japanese Patent Laying-Open Nos. 2002-167454 (PTD 4) and 2002-173543 (PTD 5) describe that a fluorine-based thermoplastic elastomer including an elastomeric polymer chain segment and a non-elastomeric polymer chain segment is molded and irradiated with a gamma-ray to give a molded article

Finally, EP 1231239 A1 (PTD 6) relates to manufactured articles obtainable from a composition consisting of:

1) 100 phr of a fluorinated thermoplastic elastomer having a block structure with at least a fluorinated polymeric segment of B type having elastomeric properties and at least a fluorinated polymeric segment of A type having plastomeric properties, whereby in at least one among the A or B type segments monomeric units are present which derive from at least an iodinated olefin having the formula:

$$CX_2=CX-R_f-CHR-I \qquad (IB)$$

wherein:

X is -H, -F, or -CH$_3$; R is -H or -CH$_3$; R$_f$ is a (per)fluoroalkylenic, linear or branched radical, optionally containing one or more atoms of ether oxygen, or a (per)-fluoropolyoxyalkylenic radical;

2) from 0.1 to 40 phr of a crosslinking agent able to give peroxidic crosslinking of fluoroelastomers; and subsequent radiation of the manufactured article by GAMMA radiations, from 1 to 50 Mrad, or BETA radiations from 10 to 500 KGy.

US 5275887 A (PTD7) concerns a a composition comprising a blend of (a) a thermoplastic copolymer of vinylidene fluoride and hexafluoropropylene, the copolymer being at least 15% crystalline and (b) a fluoroelastomer copolymer which contains at least about 20% by weight of fluorine and which contains repeating units containing about 30 to 70 mole per cent vinylidene fluoride and about 70 to 30 mole percent hexafluoropropylene, at least one of (a) and (b) being crosslinked.

The fluorine-based thermoplastic elastomer is suitable for extrusion molding and injection molding because the thermoplastic resin component constituting the fluorine-based thermoplastic elastomer melts at a temperature greater than or equal to a melting point of the thermoplastic resin component while the shape of the thermoplastic resin component is fixed at a temperature less than the melting point. Further, the shape can be reversibly changed to allow the molded material to be reused and remolded. The fluorine-based thermoplastic elastomer including a heat meltable thermoplastic resin component, however, is inferior in heat resistance to the fluorine rubber, particularly inferior in compression set characteristics that indicates distortion caused by heat deterioration.

An object of the present invention is to provide a method for producing a cross-linked body that allows the molded material thereof to be reused when continuous melt molding and a molding process are performed, and that exhibits excellent compression set characteristics even in a high temperature environment; and a thermoplastic fluororesin composition that is used for the method.

SOLUTIONS TO PROBLEMS

The present invention provides a thermoplastic fluororesin composition described below and a method for producing a cross-linked body.

[1] A thermoplastic fluororesin composition including:

a thermoplastic fluororesin (A) having a Shore D hardness of less than or equal to 50, the Shore D hardness being measured at 23°C in accordance with ASTM D2240; and

a cross-linked structure forming agent (B) that is selected from the group consisting of a polyamine compound (b-2), and a polyhydroxy compound (b-3) and that is capable of forming a cross-linked structure through a reaction with the thermoplastic fluororesin (A), and a cross-linkable rubber component (C),

wherein the content of the cross-linkable rubber component (C) is less than or equal to 100 parts by weight per 100 parts by weight of the thermoplastic fluororesin (A),

the thermoplastic fluororesin composition not substantially containing an acid acceptor when containing the polyamine compound (b-2), and not substantially containing at least one of the acid acceptor and an onium compound when containing the polyhydroxy compound (b-3).

The cross-linkable rubber component (C) is preferably a fluorine rubber.

The invention also relates to a method for producing a cross-linked body including the steps of: providing the thermoplastic fluororesin composition as described above and
cross-linking the thermoplastic fluororesin composition by an ionizing radiation.

The method may further include a step of molding the thermoplastic fluororesin composition between the step of providing the thermoplastic fluororesin composition and the step of cross-linking the thermoplastic fluororesin composition.

ADVANTAGEOUS EFFECTS OF INVENTION

According to the present invention, there can be provided a method for producing a cross-linked body that allows the molded material thereof to be reused when continuous melt molding and a molding process are performed, and that exhibits excellent compression set characteristics even in a high temperature environment; and a thermoplastic fluororesin composition that is used for the method. An obtained cross-linked body can be suitably used for, for example, sealing members such as packing and a gasket, especially for, for example, sealing members that are required of heat deterioration resistance in a high temperature environment (e.g., 130 to 230°C, particularly 150 to 200°C).

DESCRIPTION OF EMBODIMENTS

<Thermoplastic Fluororesin Composition>

A thermoplastic fluororesin composition according to the present invention includes a thermoplastic fluororesin (A) and a cross-linked structure forming agent (B). The thermoplastic fluororesin refers to a thermoplastic resin containing a fluorine atom.

(A) Thermoplastic Fluororesin

The thermoplastic fluororesin (A) contained in the thermoplastic fluororesin composition according to the present invention is a thermoplastic fluororesin having a Shore D hardness of less than or equal to 50, the shore D hardness being measured at 23°C in accordance with ASTM D2240. This condition is based on a new finding obtained by the present inventor. The use of the thermoplastic fluororesin (A) having a Shore D hardness of less than or equal to 50 can give a cross-linked body excellent in compression set characteristics in a high temperature environment. The Shore D hardness is preferably less than or equal to 45. The thermoplastic fluororesin composition may contain one or two or more thermoplastic fluororesins (A). When the thermoplastic fluororesin composition contains two or thermoplastic fluororesins (A), all the thermoplastic fluororesins (A) are preferred to have a Shore D hardness of less than or equal to 50.

Specific examples of the thermoplastic fluororesin (A) include a tetrafluoroethylene-perfluoroalkyl vinyl ether copolymer (PFA), a tetrafluoroethylene-hexafluoropropylene copolymer (FEP), a tetrafluoroethylene-ethylene copolymer (ETFE), polychlorotrifluoroethylene (PCTFE), a chlorotrifluoroethylene-ethylene copolymer (ECTFE), a vinylidene fluoride-hexafluoropropylene copolymer (VDF-HFP copolymer), and a vinylidene fluoride-hexafluoropropylene-tetrafluoroethylene copolymer (VDF-HFP-TFE copolymer). Particularly, for example, a VDF-HFP copolymer and a VDF-HFP-TFE copolymer are preferably used.

In the present specification, the term "thermoplastic fluororesin" includes a fluorine-based thermoplastic elastomer. The fluorine-based thermoplastic elastomer refers to a thermoplastic elastomer containing a fluorine atom. As the thermoplastic elastomer, there can be exemplified as described above 1) a composition obtained by blending a thermoplastic resin component with a rubber component, 2) a composition formed by dynamically cross-linking a composition containing a thermoplastic resin component and a rubber component, and 3) a block copolymer of a thermoplastic resin component and a rubber component. The fluorine-based thermoplastic elastomer that can be suitably used in the present invention belongs to 3) and is a block copolymer of a thermoplastic resin component (thermoplastic polymer chain segment) and a rubber component (elastomeric polymer chain segment).

As the thermoplastic fluororesin (A), a commercially available product may be used. Specific examples of the thermoplastic fluororesin (A) having a Shore D hardness of less than or equal to 50 include, with every example referred to by its trade name, "Kynar UltraFlex B" and "Kynar UltraFlex C" (both manufactured by Arkema Inc., thermoplastic resin formed of VDF-HFP copolymer), "THV 220G" (manufactured by 3M, thermoplastic resin formed of VDF-HFP-TFE copolymer), and "DAI-EL Thermoplastic" (manufactured by DAIKIN INDUSTRIES, LTD., thermoplastic elastomer formed of block copolymer of ETFE copolymer and VDF copolymer.

The thermoplastic fluororesin (A) is a thermoplastic resin that can be cross-linked by irradiation with an ionizing radiation in the presence of a cross-linked structure forming agent (B) described later. The thermoplastic fluororesin (A) has or does not have a cross-linkable site such as an unsaturated group, a hydroxyl group, an amino group, a carbonyl group, or a halogen group. In the cross-linking by irradiation with an ionizing radiation, the thermoplastic fluororesin (A) can be cross-linked even when not having a cross-linkable site.

(B) Cross-linked Structure Forming Agent

The thermoplastic fluororesin composition according to the present invention contains a cross-linked structure forming agent (B) as an essential component. In the present specification, the term "cross-linked structure forming agent" refers to a reagent that is capable of forming a cross-linked structure together with the thermoplastic fluororesin (A) through a reaction with the thermoplastic fluororesin (A) by irradiation with an ionizing radiation.

The cross-linked structure forming agent (B) is a reagent selected from the group consisting of a polyamine compound (b-2), and a polyhydroxy compound (b-3). The cross-linked structure forming agent (B) may contain two or more cross-linked structure forming agents selected from the -(b-2), and the (b-3) but usually contains only one selected from these compounds. The cross-linked structure forming agent (B) can be selected in accordance with the cross-linking system of the thermoplastic fluororesin (A).

Further disclosed herein for reference is a polyfunctional unsaturated compound (b-1).

The polyfunctional unsaturated compound (b-1) may be a polyfunctional unsaturated compound that is generally used as a "co-cross-linking agent," for example, when a fluorine rubber is produced by cross-linking a cross-linkable rubber component with a peroxide cross-linking system. The cross-linked structure forming agent (B) can contain one or two or more polyfunctional unsaturated compounds (b-1).

Specific examples of the polyfunctional unsaturated compound (b-1) include triallyl cyanurate, triallyl isocyanurate (TAIC), triacrylformal, triallyl trimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-s-triazine, triallyl phosphite, N,N-diallyl acrylamide, 1,6-divinyl dodecafluorohexane, hexaallyl phosphoramide, N,N,N',N'-tetraallyl phthalamide, N,N,N',N'-tetraallyl malonamide, trivinyl isocyanurate, 2,4,6-trivinylmethyl trisiloxane, tri(5-norbornene-2-methylene)cyanurate, and triallyl phosphite. Among these examples, the polyfunctional unsaturated compound (b-1) preferably includes triallyl isocyanurate (TAIC) in terms of cross-linkability of the thermoplastic fluororesin (A), a physical property of the resultant cross-linked body, and particularly, compression set characteristics of the resultant cross-linked body.

The content of the polyfunctional unsaturated compound (b-1) (when two or more polyfunctional unsaturated compounds (b-1) are used, the total content of the compounds) in the thermoplastic fluororesin composition is, for example, 0.1 to 20 parts by weight, preferably 0.2 to 10 parts by weight, more preferably 1 to 8 parts by weight, per 100 parts by weight of the thermoplastic fluororesin (A). When the content of the polyfunctional unsaturated compound (b-1) is excessively small, the cross-linking of the thermoplastic fluororesin (A) by irradiation with an ionizing radiation does not sufficiently proceed, so that the resultant cross-linked body may be deteriorated in compression set characteristics. When the content of the polyfunctional unsaturated compound (b-1) is excessively large, the moldability of the thermoplastic fluororesin composition may be deteriorated.

When the thermoplastic fluororesin composition contains the polyfunctional unsaturated compound (b-1), it is important that the thermoplastic fluororesin composition does not substantially contain a peroxide compound (organic peroxide). This peroxide compound is a compound that is generally used as a "cross-linking agent," for example, when a fluorine rubber is produced by cross-linking a cross-linkable rubber component with a peroxide cross-linking system, and the peroxide compound is a reagent that is contained as an essential component when the cross-linkable rubber component is cross-linked by heat with the peroxide cross-linking system and that starts or is necessary to start the cross-linking reaction. Specific examples of such a peroxide compound include 1,1-bis(t-butylperoxy)-3,5,5-trimethylcyclohexane, 2,5-dimethylhexane-2,5-dihydroperoxide, di-t-butylperoxide, t-butyl-cumyl peroxide, dicumyl peroxide, $\alpha,\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexine-3, benzoylperoxide, t-butylperoxybenzene, t-butylperoxymaleic acid, and t-butylperoxyisopropyl carbonate.

In the present specification, the phrase "does not substantially contain a peroxide compound" means that the content of the peroxide compound is less than or equal to 0.1 parts by weight per 100 parts by weight of the thermoplastic fluororesin (A).

A thermoplastic fluororesin composition that does not substantially contain a peroxide compound can give, by irradiation with an ionizing radiation, a cross-linked body that exhibits excellent compression set characteristics even in a high temperature environment. In addition, the thermoplastic fluororesin composition can be heat-melted and does not promote cross-linking even when it is heat-melted during molding because the thermoplastic fluororesin composition does not substantially contain the peroxide compound. Accordingly, the thermoplastic fluororesin composition can easily undergo a continuous molding process with melt molding such as extrusion molding or injection molding. In addition, when there is something wrong with the molded shape, it is possible to reuse the molded material by, for example, heat-melting the molded body and performing the molding step again. Such a reuse of a material is advantageous for reduction of production costs.

The advantages of the thermoplastic fluororesin composition that have been described above can also be obtained when the composition further contains a cross-linkable rubber component (C) described later, such as a fluorine rubber. In contrast, in such a thermoplastic elastomer composition as described in PTDs 2 and 3 that is formed by dynamically cross-linking a composition containing a fluororesin, an uncross-linked fluorine rubber, and a cross-linking agent (thermally cross-linking an uncross-linked fluorine rubber with use of a cross-linking agent while melt-kneading a fluororesin, the uncross-linked fluorine rubber, and the cross-linking agent), heat meltability and moldability can be improved by increasing the content rate of the fluororesin, but it is difficult to obtain excellent compression set characteristics even when the thermoplastic elastomer composition is further cross-linked by heat or an ionizing radiation. Also in the method of cross-linking by an ionizing radiation a fluorine-based thermoplastic elastomer that includes an elastomeric polymer chain segment and a non-elastomeric polymer chain segment, as described in PTDs 4 and 5, it is difficult to obtain excellent compression set characteristics.

The polyamine compound (b-2) may be a polyamine compound that is generally used as a "cross-linking agent," for example, when a fluorine rubber is produced by cross-linking a cross-linkable rubber component with a polyamine cross-linking system. The cross-linked structure forming agent (B) can contain one or two or more polyamine compounds (b-2).

Specific examples of the polyamine compound (b-2) include hexamethylenediamine carbamate, N,N'-dicinnamylidene-1,6-hexamethylenediamine, and 4,4'-bis(aminocyclohexyl)methane carbamate. Among these examples, the polyamine compound (b-2) preferably includes N,N'-dicinnamylidene-1,6-hexamethylenediamine in terms of cross-linkability of the thermoplastic fluororesin (A), a physical property of the resultant cross-linked body, and particularly, compression set characteristics of the resultant cross-linked body.

The content of the polyamine compound (b-2) (when two or more polyamine compounds (b-2) are used, the total content of the compounds) in the thermoplastic fluororesin composition is, for example, 0.1 to 20 parts by weight, preferably 0.2 to 10 parts by weight, more preferably 1 to 8 parts by weight, per 100 parts by weight of the thermoplastic fluororesin (A). When the content of the polyamine compound (b-2) is excessively small, the cross-linking of the thermoplastic fluororesin (A) by irradiation with an ionizing radiation does not sufficiently proceed, so that the resultant cross-linked body may be deteriorated in compression set characteristics. When the content of the polyamine compound (b-2) is excessively large, the moldability of the thermoplastic fluororesin composition may be deteriorated.

When the thermoplastic fluororesin composition contains the polyamine compound (b-2), it is important that the thermoplastic fluororesin composition does not substantially contain an acid acceptor. This acid acceptor is the same as one that is generally used as an "acid acceptor," for example, when a fluorine rubber is produced by cross-linking a cross-linkable rubber component with a polyamine cross-linking system, and the acid acceptor is a reagent that is contained as an essential component when the cross-linkable rubber component is cross-linked by heat with the polyamine cross-linking system and that starts or is necessary to start the cross-linking reaction. Specific examples of such an acid acceptor include an oxide of a divalent metal, a hydroxide of a divalent metal, a mixture of an oxide of a divalent metal with a metal salt of a weak acid, and a mixture of a hydroxide of a divalent metal with a metal salt of a weak acid. Examples of the divalent metal include magnesium, calcium, zinc, and lead. Examples of the metal salt of a weak acid include a metal salt of a weak acid such as stearic acid, benzoic acid, carbonic acid, oxalic acid, or phosphorous acid.

In the present specification, the phrase "does not substantially contain an acid acceptor" means that the content of the acid acceptor is less than or equal to 0.1 parts by weight per 100 parts by weight of the thermoplastic fluororesin (A).

The thermoplastic fluororesin composition according to the present invention that does not substantially contain an acid acceptor can give, by irradiation with an ionizing radiation, a cross-linked body that exhibits excellent compression set characteristics even in a high temperature environment. In addition, the thermoplastic fluororesin composition according to the present invention can be heat-melted and does not promote cross-linking even when it is heat-melted during molding because the thermoplastic fluororesin composition does not substantially contain the acid acceptor. Accordingly, the thermoplastic fluororesin composition according to the present invention can easily undergo a continuous molding process with melt molding such as extrusion molding or injection molding. In addition, when there is something wrong with the molded shape, it is possible to reuse the molded material by, for example, heat-melting the molded body and performing the molding step again. Such a reuse of a material is advantageous for reduction of production costs.

The advantages of the thermoplastic fluororesin composition according to the present invention that have been described above can also be obtained when the composition further contains a cross-linkable rubber component (C) described later, such as a fluorine rubber. In contrast, in such a thermoplastic elastomer composition as described in PTDs 2 and 3 that is formed by dynamically cross-linking a composition containing a fluororesin, an uncross-linked fluorine rubber, and a cross-linking agent (thermally cross-linking an uncross-linked fluorine rubber with use of a cross-linking agent while melt-kneading a fluororesin, the uncross-linked fluorine rubber, and the cross-linking agent), heat meltability and moldability can be improved by increasing the content rate of the fluororesin, but it is difficult to obtain excellent compression set characteristics even when the thermoplastic elastomer composition is further cross-linked by heat or an ionizing radiation. Also in the method of cross-linking by an ionizing radiation a fluorine-based thermoplastic elastomer that includes an elastomeric polymer chain segment and a non-elastomeric polymer chain segment, as described in PTDs 4 and 5, it is difficult to obtain excellent compression set characteristics.

The polyhydroxy compound (b-3) may be a polyhydroxy compound that is generally used as a "cross-linking agent," for example, when a fluorine rubber is produced by cross-linking a cross-linkable rubber component with a polyol cross-linking system. The cross-linked structure forming agent (B) can contain one or two or more polyhydroxy compounds (b-3). The polyhydroxy compound (b-3) preferably includes a polyhydroxy aromatic compound from the viewpoint of compression set characteristics of the resultant cross-linked body.

Specific examples of the polyhydroxy aromatic compound include 2,2-bis(4-hydroxyphenyl)propane (bisphenol A), 2,2-bis(4-hydroxyphenyl)perfluoropropane (bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (bisphenol B), 4,4-bis(4-hydroxyphenyl)valeric acid, 2,2-bis(4-hydroxyphenyl)tetrafluorodichloropropane, 4,4-dihydroxydiphenylsulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may also be, for example, salts of an alkaline metal or salts of an alkaline earth metal.

The content of the polyhydroxy compound (b-3) (when two or more polyhydroxy compounds (b-3) are used, the total content of the compounds) in the thermoplastic fluororesin composition is, for example, 0.1 to 20 parts by weight, preferably 0.2 to 10 parts by weight, more preferably 1 to 8 parts by weight, per 100 parts by weight of the thermoplastic fluororesin (A). When the content of the polyhydroxy compound (b-3) is excessively small, the cross-linking of the thermoplastic fluororesin (A) by irradiation with an ionizing radiation does not sufficiently proceed, so that the resultant cross-linked body may be deteriorated in compression set characteristics. When the content of the polyhydroxy compound (b-3) is excessively large, the moldability of the thermoplastic fluororesin composition may be deteriorated.

When the thermoplastic fluororesin composition contains the polyhydroxy compound (b-3), it is important that the thermoplastic fluororesin composition does not substantially contain at least one of an acid acceptor and an onium compound. The acid acceptor and the onium compound are the same as those that are generally used as an "acid acceptor" and an "onium compound," respectively, for example, when a fluorine rubber is produced by cross-linking a cross-linkable rubber component with a polyol cross-linking system, and the acid acceptor and the onium compound are reagents that are contained as essential components when the cross-linkable rubber component is cross-linked by heat with the polyol cross-linking system and that start or are necessary to start the cross-linking reaction. Specific examples of the acid acceptor are the same as those described above. Specific examples of the onium compound include a quaternary ammonium salt, a quaternary phosphonium salt, an oxonium compound, and a sulfonium compound.

In the present specification, the phrase "does not substantially contain at least one of an acid acceptor and an onium compound" means that the content of at least one of the acid acceptor and the onium compound is less than or equal to 0.1 parts by weight per 100 parts by weight of the thermoplastic fluororesin (A).

The thermoplastic fluororesin composition according to the present invention that does not substantially contain an acid acceptor and an onium compound can also exhibit the same effect as the effect of the above-described thermoplastic fluororesin composition not substantially containing a peroxide compound.

This effect can also be exhibited when the composition further contains a cross-linkable rubber component (C) described later.

(C) Cross-linkable Rubber Component

The thermoplastic fluororesin composition according to the present invention can further contain a cross-linkable rubber component (C). The thermoplastic fluororesin composition further containing the cross-linkable rubber component (C) can also give a cross-linked body that exhibits excellent compression set characteristics even in a high temperature environment, and the thermoplastic fluororesin composition allows a continuous molding process with melt molding such as extrusion molding or injection molding, and a reuse of the molded material. Further addition of the cross-linkable rubber component (C) is advantageous for application that requires, for example, flexibility.

The cross-linkable rubber component (C) is capable of forming, by a cross-linking reaction, an elastomer (a cross-linked rubber) having the cross-linked structure described above. Specific examples of the cross-linkable rubber component (C) include an ethylene-propylene rubber (EPM), an ethylene-propylene-diene rubber (EPDM), a nitrile rubber (NBR; acrylonitrile butadiene rubber), a hydrogen-added nitrile rubber (HNBR; hydrogen-added acrylonitrile butadiene rubber), a butyl rubber (IIR), a fluorine rubber (FKM), a perfluoroelastomer (FFKM), an acrylic rubber, and a silicone rubber. Especially, a fluorine rubber (FKM) and a perfluoroelastomer (FFKM) are suitably used. As the cross-linkable rubber component (C), one component may be used, or two or more components may be used in combination.

Specific examples of the fluorine rubber (FKM) include a vinylidene fluoride (VDF)-hexafluoropropylene (HFP) polymer; a vinylidene fluoride (VDF)-hexafluoropropylene (HFP)-tetrafluoroethylene (TFE) polymer; a tetrafluoroethylene (TFE)-propylene (Pr) polymer; a vinylidene fluoride (VDF)-propylene (Pr)-tetrafluoroethylene (TFE) polymer; an ethylene (E)-tetrafluoroethylene (TFE)-perfluoromethyl vinyl ether (PMVE) polymer; a vinylidene fluoride (VDF)-tetrafluoroethylene (TFE)-perfluoromethyl vinyl ether (PMVE) polymer; and a vinylidene fluoride (VDF)-perfluoromethyl vinyl ether (PMVE) polymer.

Specific examples of the perfluoroelastomer (FFKM) include a tetrafluoroethylene (TFE)-perfluoromethyl vinyl ether (PMVE) polymer.

The cross-linkable rubber component (C) may have or does not have to have a cross-linkable site such as a carbon-carbon unsaturated group, a nitrile group, a hydroxyl group, an amino group, a carbonyl group, or a halogen group. In the cross-linking by irradiation with an ionizing radiation, the cross-linkable rubber component (C) can be cross-linked even when not having a cross-linkable site.

The content of the cross-linkable rubber component (C) (when two or more cross-linkable rubber components (C) are used, the total content of the compounds) in the thermoplastic fluororesin composition is preferably less than or equal to 100 parts by weight, more preferably less than or equal to 80 parts by weight (e.g., less than or equal to 70 parts by weight), per 100 parts by weight of the thermoplastic fluororesin (A). When the content of the cross-linkable rubber component (C) is excessively large, the moldability of the thermoplastic fluororesin composition may be deteriorated. When the thermoplastic fluororesin composition contains the cross-linkable rubber component (C), the content of the cross-linkable rubber component (C) is, for example, greater than or equal to 5 parts by weight, greater than or equal to 10 parts by weight, or greater than or equal to 20 parts by weight, per 100 parts by weight of the thermoplastic fluororesin (A).

(D) Other Components

The thermoplastic fluororesin composition according to the present invention can contain, as necessary, an additive such as a filler (reinforcing agent), a processing aid, an anti-aging agent, an antioxidant agent, a vulcanization accelerator, a stabilizer, a silane coupling agent, a flame retardant agent, a mold release agent, a wax, and/or a lubricant. Specific examples of the filler include carbon black, silica, alumina, zinc oxide, titanium dioxide, clay, talc, diatomaceous earth, barium sulfate, a silicic acid compound (e.g., a silicate), calcium carbonate, magnesium carbonate, calcium oxide, mica, graphite, aluminum hydroxide, and resin fine particles. Specific examples of the processing aid include a thermoplastic resin other than the thermoplastic fluororesin (A), a liquid rubber, an oil (e.g., a paraffin oil), a plasticizer, a softening agent, and a tackifier. The additives may be used alone, or two or more additives may be used in combination.

(E) Preparation of Thermoplastic Fluororesin Composition

The thermoplastic fluororesin composition according to the present invention can be prepared by uniformly kneading the thermoplastic fluororesin (A), the cross-linked structure forming agent (B), the cross-linkable rubber component (C) that is optionally added, and another additive. As a kneading machine, there can be used, for example, a mixing roll such as an open roll; a mixer such as a kneader or a Bumbary mixer; and an extruder such as a twin screw extruder. These compounding agents may be mixed and kneaded in one step, or all these compounding agents may be kneaded in several steps in such a manner that a part of the compounding agents is kneaded and then the remaining part of the compounding agents is kneaded. The temperature during the kneading may be a normal temperature, or the kneading may be performed under heating. From the viewpoint of uniformity of the kneading, however, it is preferred to knead the compounding agents at or around a melting temperature of the thermoplastic fluororesin (A), or at a temperature of less than or equal to the melting temperature.

<Method for Producing Cross-linked body>

A cross-linked body made from the raw material thermoplastic fluororesin composition can be suitably produced by a method including the following steps of:

(1) providing the thermoplastic fluororesin composition according to the present invention [hereinafter, referred to as step (1)]; and
(2) cross-linking the thermoplastic fluororesin composition by ionizing radiation [hereinafter, referred to as step (2)]. Preferably, the method further includes between steps (1) and (2):
(3) a step of molding the thermoplastic fluororesin composition into a predetermined shape [hereinafter, referred to as step (3)].

Step (1) may be a step of acquiring in any way the thermoplastic fluororesin composition according to the present invention or may be a step of preparing the composition. The preparation method is as described above.

Step (3) of molding the thermoplastic fluororesin composition can be performed by a usual method. The thermoplastic fluororesin composition according to the present invention can be heat-melted but does not promote cross-linking even when it is heat-melted during molding, because the thermoplastic fluororesin composition does not substantially contain a reagent that starts or is necessary to start a cross-linking reaction by heat. Accordingly, the thermoplastic fluororesin composition according to the present invention allows a continuous molding process with melt molding such as extrusion molding or injection molding. The continuous molding process allows continuous production of the cross-linked molded body, enabling reduction of production costs. The thermoplastic fluororesin composition may be molded by another molding method such as press molding. The molding temperature of the thermoplastic fluororesin composition is, for example, 150 to 320°C.

Further, in the thermoplastic fluororesin composition according to the present invention that can be heat-melted but does not promote cross-linking even when it is heat-melted during molding, when there is something wrong with the molded shape, it is possible to heat-melt the molded body and reuse the molded material by, for example, performing the molding step again.

In step (2), the thermoplastic fluororesin composition or a molded body of the thermoplastic fluororesin composition is cross-linked by an ionizing radiation to give a cross-linked body (or a cross-linked molded body). The ionizing radiation is not particularly limited, and an electron beam or a γ-ray can be preferably used. The radiation dose of the ionizing radiation is preferably 10 to 500 kGy, more preferably 30 to 200 kGy. An irradiation dose of less than 10 kGy cannot give a sufficient degree of cross-linking and tends not to give intended compression set characteristics, further mechanical strength in some cases. On the other hand, setting the irradiation dose to less than or equal to 500 kGy is advantageous for not impairing flexibility. An irradiation dose of greater than 500 kGy may possibly cause degradation of the cross-linked body by the ionizing radiation.

The method for producing a cross-linked body according to the present invention does not substantially include a step of cross-linking the thermoplastic fluororesin composition or a molded body of the thermoplastic fluororesin composition by heat. This is because the thermoplastic fluororesin composition does not substantially contain a reagent that starts or is necessary to start a cross-linking reaction by heat. If the thermoplastic fluororesin composition contains the reagent, the thermoplastic fluororesin composition further containing the cross-linkable rubber component (C) comes to be subjected to a dynamic cross-linking treatment when it is melt-molded during molding, consequently deteriorating the compression set characteristics of the resultant cross-linked body.

After the cross-linking treatment by the ionizing radiation, the cross-linked body may be subjected to a heat treatment with use of, for example, an oven (an electric furnace, a vacuum electric furnace) as necessary. When the cross-linked body is, for example, a sealing member for vacuum sealing application, it is possible to reduce a released gas component by the heat treatment, sometimes improving the sealing property of the sealing member. The temperature of the heat treatment is usually 100 to 320°C (e.g., about 170 to 230°C or about 170 to 200°C).

The cross-linked body and the cross-linked molded body that are obtained by the present invention are formed of the thermoplastic fluororesin (A) that has been cross-linked (and an optionally added additive) when the thermoplastic fluororesin composition does not contain the cross-linkable rubber component (C). The cross-linked body obtained by the present invention may take a sea-island structure of the thermoplastic fluororesin (A) that has been cross-linked and the cross-linkable rubber component (C) that has been cross-linked (that is, a cross-linked rubber) when the thermoplastic fluororesin composition further contains the cross-linkable rubber component (C). Which one of the cross-linked thermoplastic fluororesin (A) and the cross-linked rubber becomes a matrix depends on, for example, the compounding ratio between the thermoplastic fluororesin (A) and the cross-linkable rubber component (C). The component having a higher compounding ratio tends to become a matrix. The cross-linked body and the cross-linked molded body that are obtained by the present invention may have a structural form such as a co-continuous structure, a cylinder structure, or a lamellar structure, other than the sea-island structure.

The cross-linked body and the cross-linked molded body that are obtained by the present invention can be applied to various members that are required of heat resistance. Especially, the cross-linked body and the cross-linked molded body can be suitably used as, for example, sealing members such as packing and a gasket, particularly, sealing members that are required of heat deterioration resistance in a high temperature environment at 200°C or higher. The shape of the sealing member is appropriately selected according to the application of the sealing member, and a representative example of the shape is an O ring having an O shape in cross section.

EXAMPLES

Hereinafter, the present invention is described in further detail with reference to examples and comparative examples. These examples are not according to the invention. In the examples and comparative examples below, the compression set was measured according to the following method.

(Measurement of Compression Set)

In accordance with JIS K 6262, a sample (A568-214 O ring) was sandwiched between iron plates at a compression rate of 25%, warmed by an electric furnace under the conditions of 200°C for 72 hours, and then released from compression. The sample was allowed to cool for 30 minutes, and then the compression set of the sample was calculated by the following equation:

$$\text{Compression set (\%)} = \{(T0 - T1)/(T0 - T2)\} \times 100\%.$$

T0 denotes the height of the sample before the test, T1 denotes the height of the sample 30 minutes after the cooling, and T2 denotes the thickness (height) of a spacer. Table 1 shows the results.

<Example 1, not according to the invention>

According to the compounding formulation shown in Table 1 (the unit of the compounding amounts in Table 1 is part by weight), the predetermined amounts of the compounding components were kneaded with an open roll. The kneading temperature was set to 140°C. Next, the resultant thermoplastic fluororesin composition was subjected to extrusion molding at 230°C to give a molded body having a shape of a sealing member (O ring). The extrusion molding was easy that was melt molding of the thermoplastic fluororesin composition into the shape of the sealing member. Then, the molded body was irradiated with a radiation (γ-ray) at a radiation dose of 80 kGy to give a cross-linked molded body, or the sealing member (O-ring). The molded body before the irradiation with the radiation exhibited heat meltability, and it was also easy to perform the molding again by heat-melting the molded body.

<Examples 2 to 5, not according to the invention, and Comparative Examples 1 to 3>

A cross-linked molded body, or a sealing member was manufactured in the same manner as in Example 1 except that the compounding components and the compounding amounts of the thermoplastic fluororesin composition were set as shown in Table 1. Also in any of Examples 2 to 5 and Comparative Examples 1 to 3, the extrusion molding was easy that was melt molding of the thermoplastic fluororesin composition into the shape of the sealing member. In addition, the molded body before the irradiation with the radiation exhibited heat meltability, and it was also easy to perform the molding again by heat-melting the molded body.

<Comparative Example 4>

A kneaded material was obtained by kneading, with an open roll, the cross-linked structure forming agent (B) and the cross-linkable rubber component (C) according to the compounding formulation shown in Table 1. This kneaded material, the thermoplastic fluororesin (A), and a peroxide were kneaded according to the compounding formulation shown in Table 1 with LABO PLASTOMILL [manufactured by Toyo Seiki Seisaku-sho, Ltd.). The kneading temperature during the kneading was set to 200°C, and the rotation speed was 50 rpm. Next, the resultant thermoplastic fluororesin composition was subjected to extrusion molding at 230°C to give a molded body having the shape of the sealing member (O ring). The extrusion molding was easy that was melt molding of the thermoplastic fluororesin composition into the shape of the sealing member. Then, the molded body was irradiated with a radiation (γ-ray) at a radiation dose of 80 kGy to give a cross-linked molded body, or the sealing member (O-ring).

[Table 1]

Thermoplastic fluororesin composition

| | | Thermoplastic resin composition | | | | | | | Dose of radiation (kGy) | Compression set (%) |
| | | Thermoplastic fluororesin (A) | | | Cross-linked structure forming agent (B) | Cross-linkable rubber component (C) | | Peroxide | | |
| | | a-1 | a-2 | a-3 | b-1 | c-1 | c-2 | d-1 | | |
| Example | 1 | 100 | | | 6 | | | | 80 | 45 |
| | 2 | 80 | | | 6 | 20 | | | 80 | 43 |
| | 3 | 60 | | | 6 | 40 | | | 80 | 45 |
| | 4 | | 100 | | 5 | | | | 80 | 48 |
| | 5 | 60 | | | 6 | | 40 | | 80 | 47 |
| Comparative Example | 1 | 100 | | | | | | | 80 | 97 |
| | 2 | | 100 | | | | | | 80 | 86 |
| | 3 | | | 100 | | | | 6 | 80 | 98 |
| | 4 | 40 | | | 4 | 60 | | | 80 | 70 |

The details of the compounding components used in the examples and the comparative examples are as follows.

[1] Thermoplastic fluororesin a-1: thermoplastic resin formed of VDF-HFP copolymer ("Kynar UltraFlex B" manufactured by Arkema Inc., Shore D hardness at 23°C measured in accordance with ASTM D2240: 40),

[2] Thermoplastic fluororesin a-2: fluorine-based thermoplastic elastomer being block polymer of vinylidene fluoride (VDF) polymer and tetrafluoroethylene-ethylene polymer (ETFE) ("DAI-EL Thermoplastic T-530" manufactured by DAIKIN INDUSTRIES, LTD., Shore D hardness at 23°C measured in accordance with ASTM D2240: 18),

[3] Thermoplastic fluororesin a-3: thermoplastic resin formed of VDF-HFP copolymer ("Kynar 2850-00" manufactured by Arkema Inc., Shore D hardness at 23°C measured in accordance with ASTM D2240: 73),

[4] Cross-linked structure forming agent b-1: triallyl isocyanurate ("TAIC" manufactured by Nippon Kasei Chemical Company Limited),

[5] Cross-linkable rubber component c-1: vinylidene fluoride (VDF)-hexafluoropropylene (HFP)-tetrafluoroethylene (TFE) polymer ("DAI-EL G902" manufactured by DAIKIN INDUSTRIES, LTD.),

[6] Cross-linkable rubber component c-2: vinylidene fluoride (VDF)-hexafluoropropylene (HFP) polymer, and

[7] Peroxide d-1: 5-dimethyl-2,5-di(tert-butylperoxy)hexane ("PERHEXA 25B" manufactured by NOF corporation).

## Claims

1.  A thermoplastic fluororesin composition comprising:

    a thermoplastic fluororesin (A) having a Shore D hardness of less than or equal to 50, the Shore D hardness being measured at 23°C in accordance with ASTM D2240;
    a cross-linked structure forming agent (B) that is selected from the group consisting of a polyamine compound (b-2), and a polyhydroxy compound (b-3) and that is capable of forming a cross-linked structure through a reaction with the thermoplastic fluororesin (A), and
    a cross-linkable rubber component (C),
    wherein a content of the cross-linkable rubber component (C) is less than or equal to 100 parts by weight per 100 parts by weight of the thermoplastic fluororesin (A),
    the thermoplastic fluororesin composition not substantially containing an acid acceptor when containing the polyamine compound (b-2), and not substantially containing at least one of the acid acceptor and an onium compound when containing the polyhydroxy compound (b-3),
    wherein term "cross-linked structure forming agent" refers to a reagent that is capable of forming a cross-linked structure together with the thermoplastic fluororesin (A) through a reaction with the thermoplastic fluororesin (A) by irradiation with an ionizing radiation,
    the phrase "does not substantially contain an acid acceptor" means that the content of the acid acceptor is less than or equal to 0.1 parts by weight per 100 parts by weight of the thermoplastic fluororesin (A), and
    the phrase "does not substantially contain at least one of an acid acceptor and an onium compound" means that the content of at least one of the acid acceptor and the onium compound is less than or equal to 0.1 parts by weight per 100 parts by weight of the thermoplastic fluororesin (A).

2.  The thermoplastic fluororesin composition according to claim 1, wherein the cross-linkable rubber component (C) is a fluorine rubber.

3.  A method for producing a cross-linked body comprising the steps of:

    providing the thermoplastic fluororesin composition according to claim 1 or 2; and
    cross-linking the thermoplastic fluororesin composition by an ionizing radiation.

4.  The method according to claim 3, further comprising a step of molding the thermoplastic fluororesin composition between the step of providing the thermoplastic fluororesin composition and the step of cross-linking the thermoplastic fluororesin composition.

## Patentansprüche

1.  Eine thermoplastische Fluorharzzusammensetzung, umfassend:

ein thermoplastisches Fluorharz (A) mit einer Shore D-Härte von weniger als oder gleich 50, wobei die Shore D-Härte bei 23°C gemäß ASTM D2240 gemessen wird;

ein eine vernetzte Struktur bildendes Mittel (B), das ausgewählt ist aus der Gruppe bestehend aus einer Polyaminverbindung (b-2) und einer Polyhydroxyverbindung (b-3) und das in der Lage ist, durch eine Reaktion mit dem thermoplastischen Fluorharz (A) eine vernetzte Struktur zu bilden, und

eine vernetzbare Kautschukkomponente (C),

wobei ein Gehalt der vernetzbaren Kautschukkomponente (C) weniger als oder gleich 100 Gewichtsteile pro 100 Gewichtsteile des thermoplastischen Fluorharzes (A) beträgt,

wobei die thermoplastische Fluorharzzusammensetzung im Wesentlichen keinen Säureakzeptor enthält, wenn sie die Polyaminverbindung (b-2) enthält, und im Wesentlichen nicht mindestens einen aus dem Säureakzeptor und einer Oniumverbindung enthält, wenn sie die Polyhydroxyverbindung (b-3) enthält,

wobei sich der Ausdruck "eine vernetzte Struktur bildendes Mittel" auf ein Reagens bezieht, das in der Lage ist, zusammen mit dem thermoplastischen Fluorharz (A) durch eine Reaktion mit dem thermoplastischen Fluorharz (A) durch Bestrahlung mit einer ionisierenden Strahlung eine vernetzte Struktur zu bilden;

der Ausdruck "im Wesentlichen keinen Säureakzeptor enthält" bedeutet, dass der Gehalt des Säureakzeptors weniger als oder gleich 0,1 Gewichtsteile pro 100 Gewichtsteile des thermoplastischen Fluorharzes (A) beträgt und

der Ausdruck "im Wesentlichen nicht mindestens eines aus einem Säureakzeptor und einer Oniumverbindung enthält" bedeutet, dass der Gehalt mindestens eines aus dem Säureakzeptor und der Oniumverbindung weniger als oder gleich 0,1 Gewichtsteile pro 100 Gewichtsteile des thermoplastischen Fluorharzes (A) beträgt.

2. Die thermoplastische Fluorharzzusammensetzung nach Anspruch 1, wobei die vernetzbare Kautschukkomponente (C) ein Fluorkautschuk ist.

3. Ein Verfahren zur Herstellung eines vernetzten Körpers, umfassend die Schritte:

Bereitstellen der thermoplastischen Fluorharzzusammensetzung nach Anspruch 1 oder 2; und
Vernetzen der thermoplastischen Fluorharzzusammensetzung durch eine ionisierende Strahlung.

4. Das Verfahren nach Anspruch 3, weiter umfassend einen Schritt des Formens der thermoplastischen Fluorharzzusammensetzung zwischen dem Schritt des Bereitstellens der thermoplastischen Fluorharzzusammensetzung und dem Schritt des Vernetzens der thermoplastischen Fluorharzzusammensetzung.

**Revendications**

1. Composition de fluororésine thermoplastique comprenant :

une fluororésine thermoplastique (A) ayant une dureté Shore D inférieure ou égale à 50, la dureté Shore D étant mesurée à 23°C conformément à la norme ASTM D2240 ;

un agent formant une structure réticulée (B) qui est choisi dans le groupe constitué par un composé polyamine (b-2) et un composé polyhydroxy (b-3) et qui est capable de former une structure réticulée par réaction avec la fluororésine thermoplastique (A), et

un composant caoutchouc réticulable (C),

dans laquelle la teneur en le composant caoutchouc réticulable (C) est inférieure ou égale à 100 parties en poids pour 100 parties en poids de la fluororésine thermoplastique (A),

la composition de fluororésine thermoplastique ne contenant sensiblement pas d'accepteur d'acide quand elle contient le composé polyamine (b-2), et ne contenant sensiblement pas au moins l'un parmi un accepteur d'acide et un composé onium quand elle contient le composé polyhydroxy (b-3),

dans laquelle l'expression "agent formant une structure réticulée" se réfère à un réactif qui est capable de former une structure réticulée conjointement avec la fluororésine thermoplastique (A) par réaction avec la fluororésine thermoplastique (A) au moyen d'une irradiation avec un rayonnement ionisant,

l'expression "ne contenant sensiblement pas d'accepteur d'acide" signifie que la teneur en l'accepteur d'acide est inférieure ou égale à 0,1 partie en poids pour 100 parties en poids de la fluororésine thermoplastique (A), et

l'expression "ne contenant sensiblement pas au moins l'un parmi un accepteur d'acide et un composé onium" signifie que la teneur en au moins l'un parmi l'accepteur d'acide et le composé onium est inférieure ou égale à 0,1 partie en poids pour 100 parties en poids de la fluororésine thermoplastique (A).

2. Composition de fluororésine thermoplastique selon la revendication 1, dans laquelle le composant caoutchouc réticulable (C) est un caoutchouc fluoré.

3. Méthode pour produire un corps réticulé, comprenant les étapes:

obtention de la composition de fluororésine thermoplastique de la revendication 1 ou 2 ; et
réticulation de la composition de fluororésine thermoplastique au moyen d'un rayonnement ionisant.

4. Méthode selon la revendication 3, comprenant en outre une étape de moulage de la composition de fluororésine thermoplastique entre l'étape d'obtention de la composition de fluororésine thermoplastique et l'étape de réticulation de la composition de fluororésine thermoplastique.

**REFERENCES CITED IN THE DESCRIPTION**

**Patent documents cited in the description**

- JP 2005113035 A
- WO 2006057331 A
- JP 2009138158 A
- JP 2002167454 A
- JP 2002173543 A
- EP 1231239 A1
- US 5275887 A